# EUROPEAN PATENT APPLICATION

(11) **EP 0 694 252 A1**
(43) Date of publication of application: **31.01.1996**
(21) Application number: 94500140.2
(22) Date of filing: 29.07.1994
(51) Int. Cl.: A01G 9/14, A01G 9/22

(54) **Industrial structure for asymmetrical peaked roof glasshouse with three different slopes equipped with roller blind windows in one of the slopes and devices for the installation of a second detachable inner ply**

(71) Applicant: CAJA RURAL DE ALMERIA, SOCIEDAD COOPERATIVA ANDALUZA DE CREDITO LIMITADA, E-04006 Almeria (ES)
(72) Inventor: Lopez Galvez, José, ES-04006 Almeria (ES); Rovira Soler, Juan, ES-04006 Almeria (ES); Bretones Castillo, Francisco, ES-04006 Almeria (ES)
(74) Representative: Alonso Langle, Emilio

(57) **Abstract**

The industrial structure described in this report consists of an asymmetric peaked glasshouse formed by two peaks in the longer slope thus bracing all the perimetric pillars that support the ply (15) by means of ties (8) anchored between the pillars and the foundations which, in turn, enable such ties the pre-stressing of the structure to achieve minimum requirements. It also incorporates ties between the support of the cultures and the foundation. Furthermore, the glasshouse incorporates a system located at the joints of the pillars (3,4,9), belts (11,11') and lintels (5) enabling to amend eventual laying errors. The glasshouse incorporates a series of counterweighted blind roller windows and a thermal screen (29) that enhance the temperature conditions during night hours.

## Description

### OBJECT OF THE INVENTION

The invention which is the object of this report and which serves for agricultural applications refers to a kind of glasshouse with several special components. These have been designed to execute its structure and to house the closures and driving devices of windows and the detachable inner ply. The ply is asymmetrical. It has a modular structure and incorporates an undetermined number of modules. Each module is formed by frames made with three intermediate pillars. The modules are interlaced at the top by means of lintels supporting the ply closure and are traversely braced. Such support consist of pillars, lintels, belts and guts. All these elements are fixed by means of bolts. Some unbendable knots formed by the incorporation of iron spurs confer rigidity to the structure. Such knots secure the supports to the lintels and the relevant belts, following orthogonal planes. The installation of ties between the heads of the perimetric pillars and their anchoring to the foundations around the construction confer a great degree of a cross-sectional stability to the structure as a whole. On the other hand, it allows to pre-stress it thus enabling an optimal dimensioning which leads to a minimum weight of supporting material since the side stresses of the glasshouse structure are absorbed by the soil. The glasshouse incorporates a system of lateral and roof windows so that they can be automatically opened and closed. A flat ply can be installed inside the glasshouse between the support of the stakes of the cultures and the base of the iron spurs. Such ply acts as thermal screen which can be folded or unfolded.

In order to take a better advantage of sun radiations, these glasshouse should be laid following an East-West axis. The asymmetrical ply of each frame has three sides with an approximate projection on a horizontal plane. Two of the sides, with different slopes, are orientated towards the same peak facing the sun beams. The reason for the slopes to be different is based on two grounds: the first one is to obtain a better energy exploitation in the major part of the glasshouse without the need of an excessive height; the second and most important ground is to achieve either an intermediate anchoring (by means of its attachment to an omegoid belt) thus minimizing the intrusion of water in the case of rainfalls since the greater slope increase the water speed at that point or, in the case of a ply supported or slightly supported by such belt (as in the case of a trellised vine or flexible plastic film under weak wind conditions) to confer an initial counter stress to reduce the stress of the end belts. If such counter stress is not applied, the result would be a quasi-flat membrane, which would generate great stresses, both on the closure and on the structure. On the peak where the window is located, the slope is smaller than the angle of incidence of the sun beams in the time of the year when such beams have the smallest angle of incidence on the horizontal plane.

The closure material is a flexible plastic film, fixed to the structure either by means of a net of the trellised vine type, or by means of omegoid belts with rounded edges where the flexible plastic films are introduced and then fixed by means of wooden wedges or other elements intended for the same purpose. The procedure followed for the sides is the same as the one described for the fixing of the ply.

### BACKGROUND OF THE INVENTION

For three decades, industries engaged in flexible materials for glasshouse closures have developed a series of products which offer better properties against wear and tear, transmissitivity, light diffusion, thermo-isolating effect and other properties, taking into consideration their direct applications on the construction of glasshouses.

Specifically, the structural typology derived from local technologies of the trellised vine culture of table grapes has led to a very simple glasshouse although it has always had to face the problem of its inadequate water-tightness. However, the construction procedure is closer to a stressed structure rather than to the classical support-pillar or lintel structure normally used for the construction of glasshouses.

Although the wire nets that fix the closure materials of glasshouses are eliminated due to water-tightness reasons, the solution offered by the stressed structure by means of side anchorings enables the pre-stressing of the structure which confers a lateral stability to such structure enabling at the same time to transfer the horizontal stresses caused by the fixing of products directly to the foundations which in turn proves to be cheaper (such element working by traction).

These kind of applications were first used for wooden structures and flat plies of plastic films, normally polyethylene, which due to its wear and tear caused by sun light makes it necessary to renew them annually or after a few years depending on its characteristics.

The use of wooden structures for this type of glasshouse made very difficult to organize the cultures, on the one hand due to the resistance and dimensional limitations of the structural elements and, on the other hand, to the difficulties entailed by the inclusion of fittings that offer a better performance of the installations such as sufficient ventilation, isolating elements such as thermal screens, a greater air volume in the installations and the introduction of guts enabling the complete collection of waters and a better protection of cultures.

The first steps towards the replacements of the older steel structures have led to pseudo-artisan installations which have proven to be an improvement but that considerably increased investment costs since the joints were basically made by means of on site welding. This is a consequence of the impossibility of pre-manufacturing such installations at the workshop and the inability to simplify its assembly in a cheaper way.

Another aspect that has represented an evolution of glasshouse structures has been to erect them increasing their height due to the requirements of the new vegetal materials, basically those of an undetermined rate of growth.

Problems derived from culture needs and building evolutions mentioned above, and from the emergence of new materials have been covered by the utility model 9302989 called "GLASSHOUSE WITH AN ASYMMETRICAL PLY AND AUTOMATED SIDE AND ROOF WINDOWS" the owner of which is the Caja Rural de Almería, S.C. And. de Crédito Ltda, published on 15.11.1993.

The greater height required by asymmetrical glasshouses confers the pillars a greater slenderness which, in turn, calls for larger sections and elastic characteristics. In an effort to avoid this inconvenience which would increase the cost of the installation, the option is to fix steel spurs on traverse orthogonal planes with an umbrella shape that shorten the bending lengths of the pillars.

### DESCRIPTION OF THE INVENTION

The glasshouse which is object of this invention incorporates an undetermined number of modules each formed by frames composed by three intermediate interlaced pillars supporting the belts and guts by means of bolted joints and steel spurs orthogonally laid which confer rigidity to the structure thanks to the incorporation of such elements.

These joints are formed by elements with a single hole at their ends. Once they have been assembled they constitute an assembly formed by pillars, lintels and belts joined by means of steel spurs which confer to the whole assembly sufficient rigidity so that by means of the different non-vertical elements they can be anchored to the perimetric foundations through wire ties which also act as ties that enable to pre-stress the structure in an effort to minimize the stresses and the horizontal displacements.

This way, the number of pillars supporting the structure has been reduced with a greater alleviation due to its complete lateral bracing and direct pre-stressing to foundation which confers a greater stability to the glasshouse and improves the ratio between the weight of the resistant material and the number square meters of glasshouse built.

In contrast to other already known glasshouses, the use of welding at the joints of the structure has been avoided thus decreasing the manufacturing costs of the different items and the assembly time. Furthermore, it is now possible to amend eventual laying errors thanks to the adaptability of the joining elements and the procedure followed for the assembly of the different items forming the structure.

The glasshouse incorporates both at its sides and at the smaller ply roller blind windows which automatically open and close by means of a counterweight system to achieve an accurate tightness of the flexible material. The counterweight system is also used for the side windows.

The location of the roof window and the opening and closing device enable to open the largest possible surface up to the top.

The incorporation of the roller blind window mechanism enables a better air renovation, decreasing the condensation inside the glasshouse. This will prevent cryptogamic diseases and achieve a perfect tightness thanks to the counterweight system.

Furthermore, the glasshouse enables to include a detachable inner ply made of flexible plastic or thermal screen which improves the thermal conditions at night as well as the integral of radiation. For this purpose, the supports of the inner ply will be located between the bases of the umbrellas of lintels and belts and the fixing of the wires that support the stakes of the cultures.

The asymmetric ply of each frame incorporates three sides with an approximate projection on the horizontal plane. Two of the sides located at the same peak but with different slope are orientated towards the sun beams. The opposite side which incorporates a window has a slope smaller than the angle of incidence of sun beams at the time of the year when such beams affect the horizontal plan with the lesser angle.

The joining of the two sides located at the same peak but with different slope is made by means of a wedge of the ply made of wood on an omegoid profile with rounded edges or any other element enabling the adequate fixing of such joint. This procedure also enables a better water-tightness for the installation.

If a trellised vine type ply is used with two wire nets fixing the material inside, the joining of both sides with different slopes located at the same peak will be made by means of a tubular profiles and the joints of the ply will be located at the plane with the smaller slope.

The kind of ply proposed with two slopes in the larger peak confers a smaller suction resultant enabling a better performance of the closing material, a better durability and fewer requirements on the structure assembly.

The closure material is always made of a flexible plastic film fixed to the structure either by means of two wire nets that fix the flexible material inside or by means of wooden wedges or any similar element serving the same purpose, on omegoid belts with rounded edges that prevent the breaking of the plastic film used as closing material.

Apart from its normal purpose, the pipe used to collect rain water also serves as a structural element to fix the structure either if it is made of a flexible plastic film or fixed by means of a trellised vine net strong enough to enable the access and circulation either to assemble the ply or for the handling and maintenance operations.

### DESCRIPTION OF THE DRAWINGS

To complement this description and in an effort to better understand the main characteristics of the invention, a set of drawings is attached to this descriptive report forming an integral part of it and where, as an illustration and without limitation, the following has been represented:

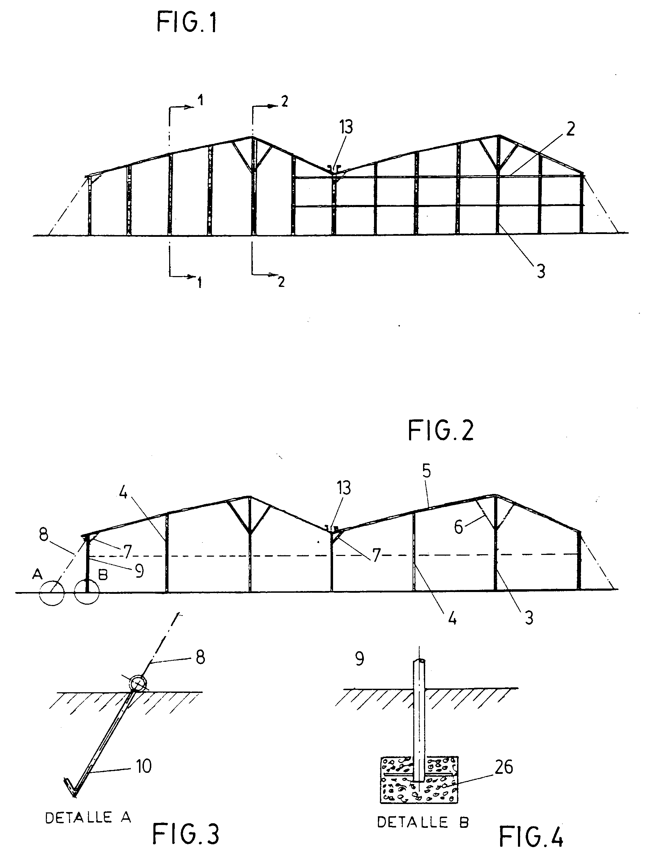

Figure 1 represents the front view of the gable wall showing two possible solutions depending on the king of closure chosen: a flexible plastic film on the right side, or two wire nets that fix such flexible material inside, on the left side.
Figure 2 shows an intermediate frame of the glasshouse.
Figure 3 shows a detail of the anchoring of the tie to the foundations.
Figure 4 shows the fixing of one of the pillars to the soil by means of the relevant concrete shoe.

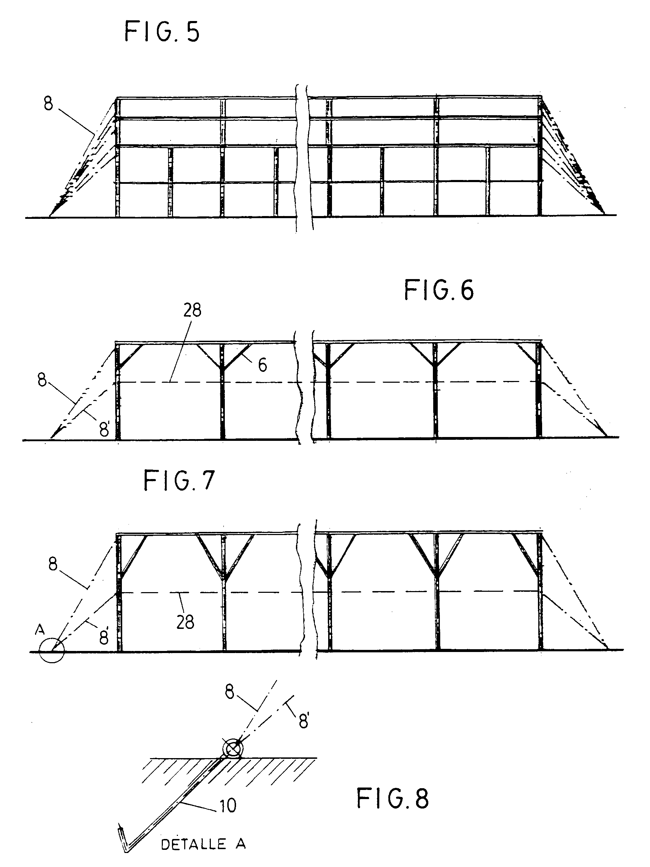

Figure 5 shows a side view of the glasshouse.
Figure 6 shown the 1-1 section mentioned in figure 1.
Figure 7 shows the 2-2 section mentioned in figure 1.
Figure 8 shows the anchoring of the ties.

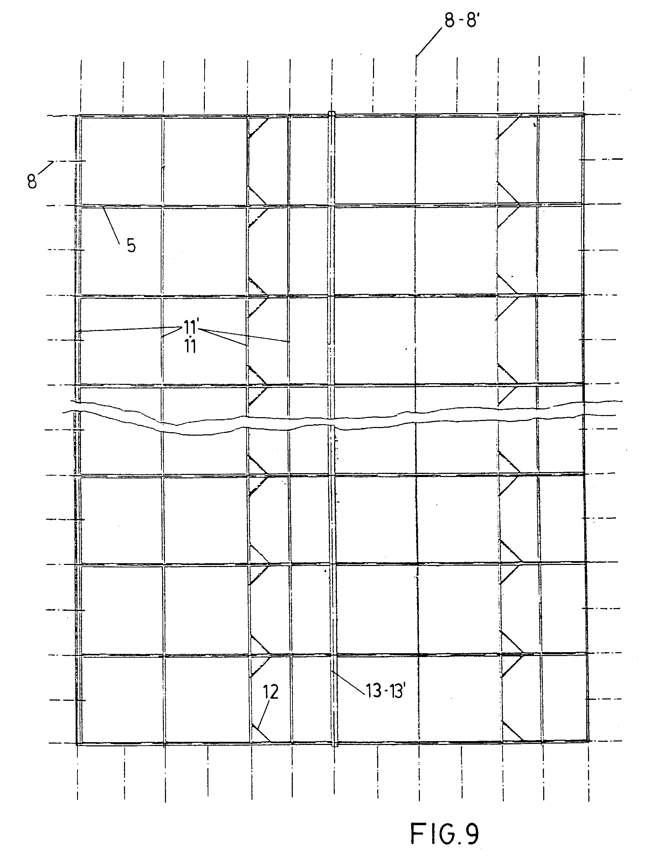

Figure 9 shows a plant view of the glasshouse.

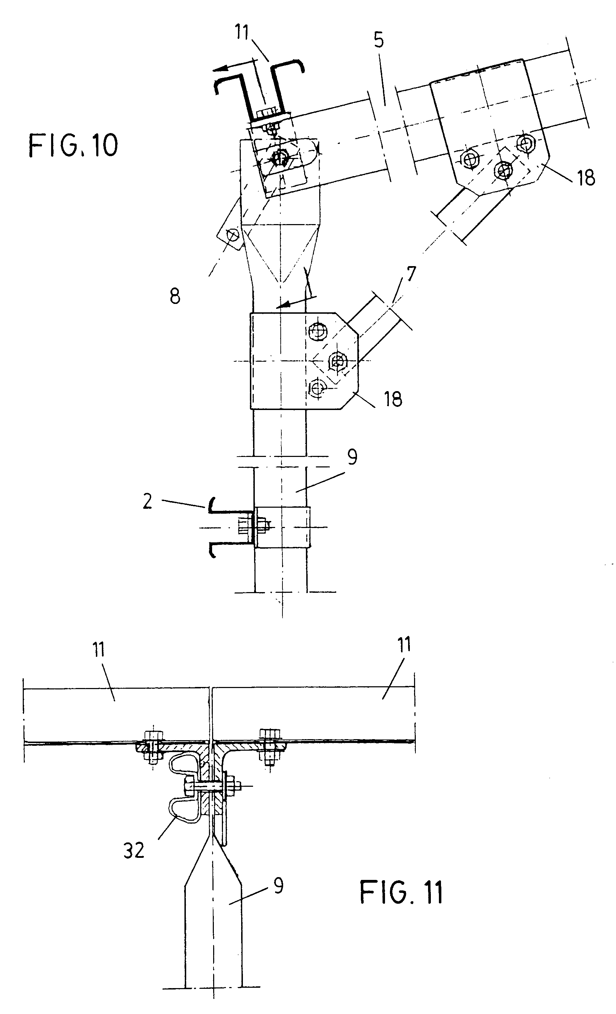

Figure 10 shows a detail of the joint of the pillar with the lintel and the belt of the left side of the glasshouse to close it by means of a flexible plastic film.
Figure 11 shows a view of the section at the point where the pillar, the belt and the lintel mentioned in figure 10 meet.

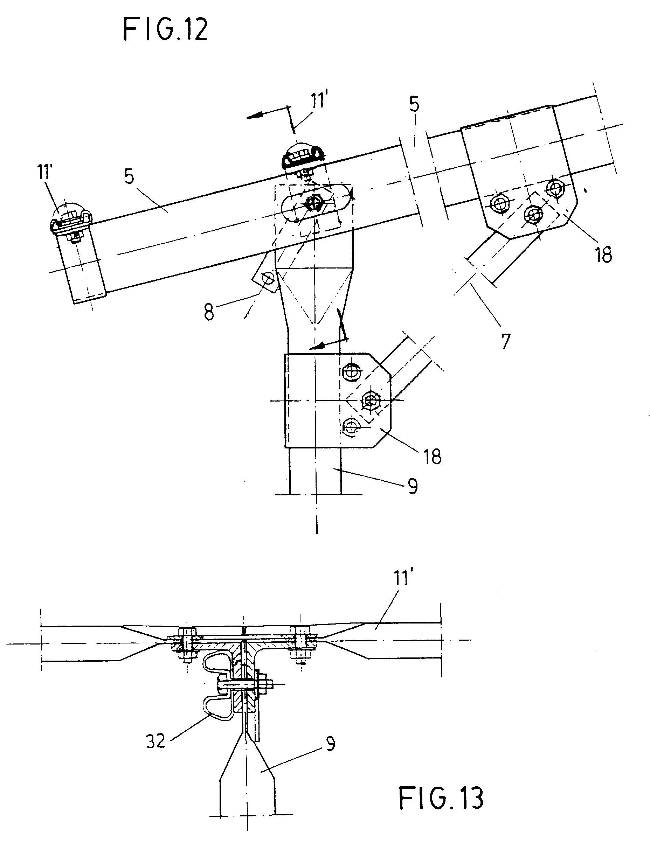

Figure 12 shows a detail of the joint of the pillar with the lintel for closure with a plastic film between metal nets.
Figure 13 shows a view of the section at the point where the pillar, the belt and the lintel mentioned in figure 12 meet.

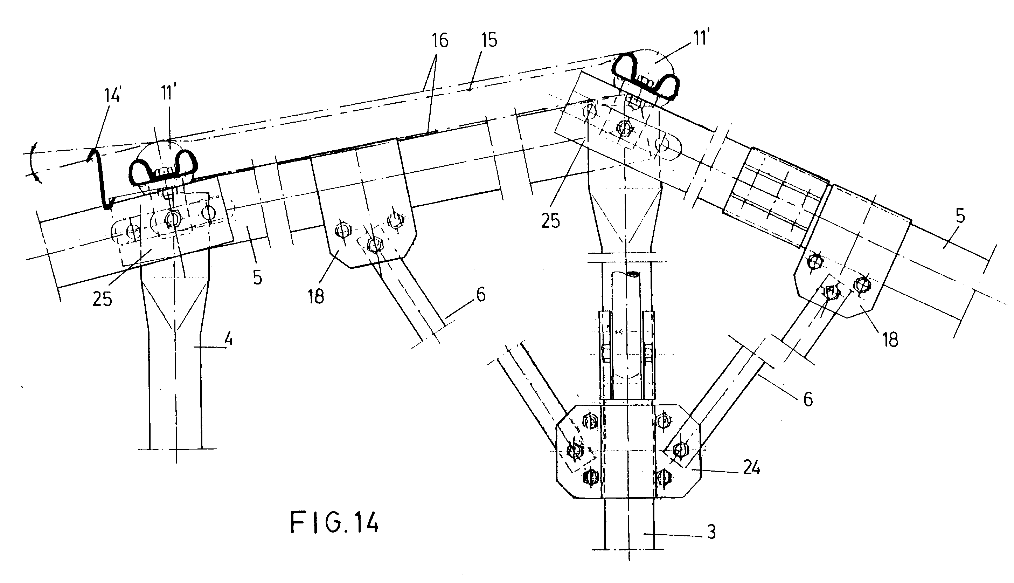

Figure 14 shows a detail of the head piece and intermediate joints for closure with a plastic film between metal nets.
Figure 15 shows details of the head piece and intermediate joints for closure with a plastic film.

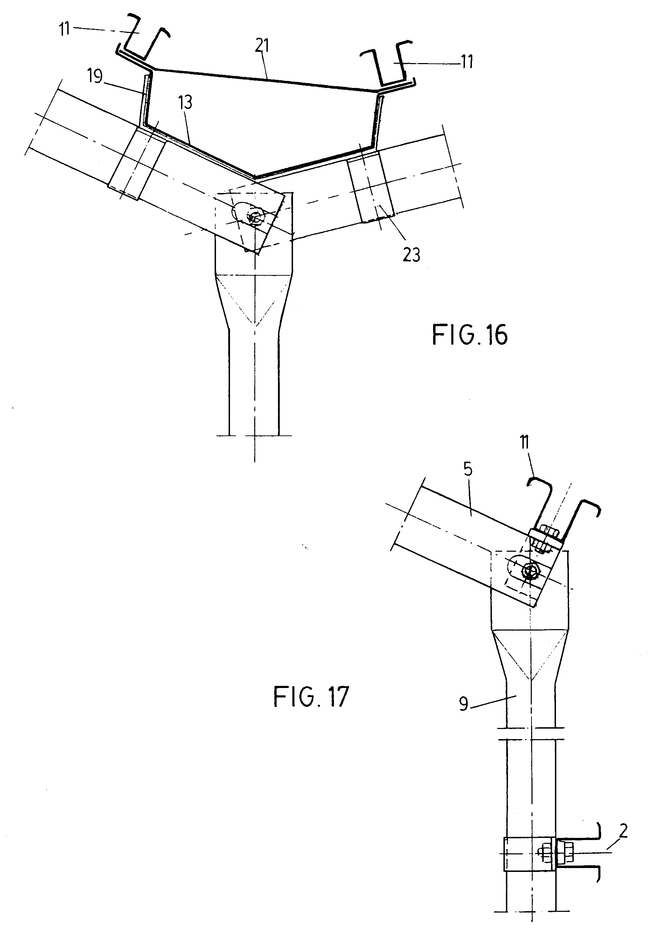

Figure 16 shows the joint between two modules of the glasshouse for closure with a plastic film.
Figure 17 shows the joint of the right side where the pillar and the lintel meet.
Figure 18 shows the joint between two modules of the glasshouse for closure with a plastic film between metal nets.
Figure 19 shows a view of the gut from A.
Figure 20 shows a joint of the right side where the pillar and lintel meet.
Figure 21 shows a detail of the joint of the steel spurs in peak and from pillars for the closure with a plastic film.
Figure 22 shows a detail of the joint of the steel spurs in peak and from pillars for the closure with a plastic film between two nets.

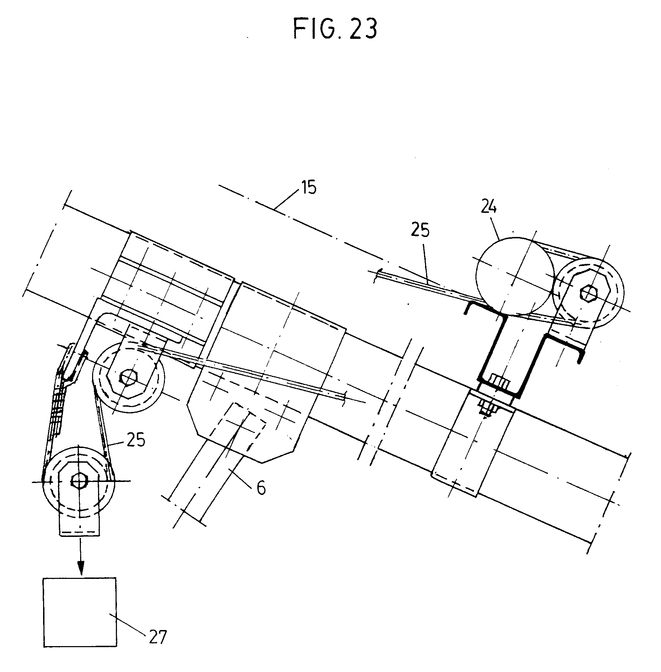

Figure 23 shows a detail of the ply window mechanism.

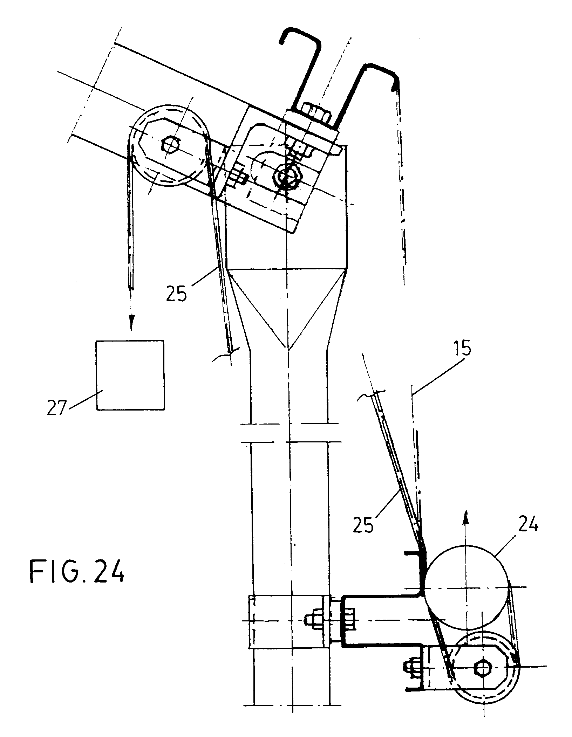

Figure 24 shows the mechanism of the side window.

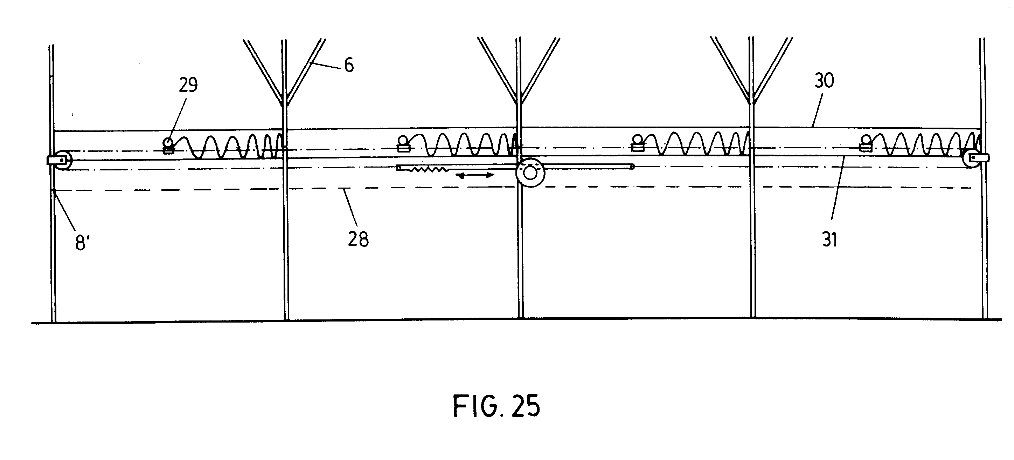

Figure 25 shows the location of the detachable ply or thermal screen.

### PREFERRED EXECUTION OF THE INVENTION

In the light of the figures, it can be noticed that the structure proposed by this invention consists of an industrial glasshouse structure with asymmetrical peaked roof and three different slopes that incorporate blind roller windows in one of the peaks and on the sides, with devices for the installation of a second detachable inner ply formed by a gable wall which presents two possible solutions to fix the closure. When such closure is made of flexible plastic film the fixing will require steel spurs on horizontal belts (2) fixed to the pillars (3) of such wall and when the closure is made by means of two wire nets fixing the flexible material mentioned above inside, the nets will be fixed on the relevant belts.

The pillar (3) consists of steel spurs (6) located on top of it. Such steel spurs reduce the bending length on that place and confer unbendability to the joint formed by the pillar (3) with the lintels (5) at the top.

The intermediate pillar (4) does not require any steel spurs at that plane although at the traverse plane (section 1-1) there is a steel spur to confer rigidity to the relevant belts since there is no need to reduce the bending length.

The pillar (9) incorporates at its top a small steel spur (7) that confers also rigidity to such joint and which by means of the tie (8) is anchored to the foundation. Such tie also stabilizes and pre-stresses the structure transferring a great part of the tensioning needs to the foundations through the anchoring (10) and to the soil by means of the support (9) thanks to the relevant concrete shoe (26).

The peaks (12) incorporate steel spurs to confer rigidity to the belts at the horizontal plane and to the gut (13-13'). This element serves both as draining and as support for the ply.

The pillar (9) narrows at the point where it joints with the lintel and the tie (8) by means of a bolt. The belt (11) is also fixed by means of bolts. The belts (11') located at the fixing area also are finished by means of a narrowing of both ends of the tube incorporating side flanges that confer rigidity to such section. This same kind of finishing is implemented at the ends (25) and (32) of the lintels (5).

The pillar (3) of the head piece incorporates a double iron mounting (24) which houses the steel spurs (6), fixed to the lintels (5) by means of such mountings (18). The end of the lintel (25), which already has been drilled to amend the eventual laying errors that might arise, can be seen at the point of the head piece where the lintels of the two peaks (5), the pillar (3) and the belts (11) meet. This same finishing can be observed at the end (25) of the lintel (5), at the point where the intermediate supports and the two lintels of the same peak but with different slope meet. All lintels incorporate the same type of finishing to enable laying amendments in the whole structure.

The metal nets (16) are anchored to their ends around the belts (11') acting as separators in the intermediate areas. The plastic ply (15) is located between both elements, and the fixing elements (14) are located close to the intermediate joint corresponding to the area with greater slope. This greater slope at the fixing area will compensate eventual water accumulations and the corresponding roof leaks originated by the fact that the plastic presents holes in such area.

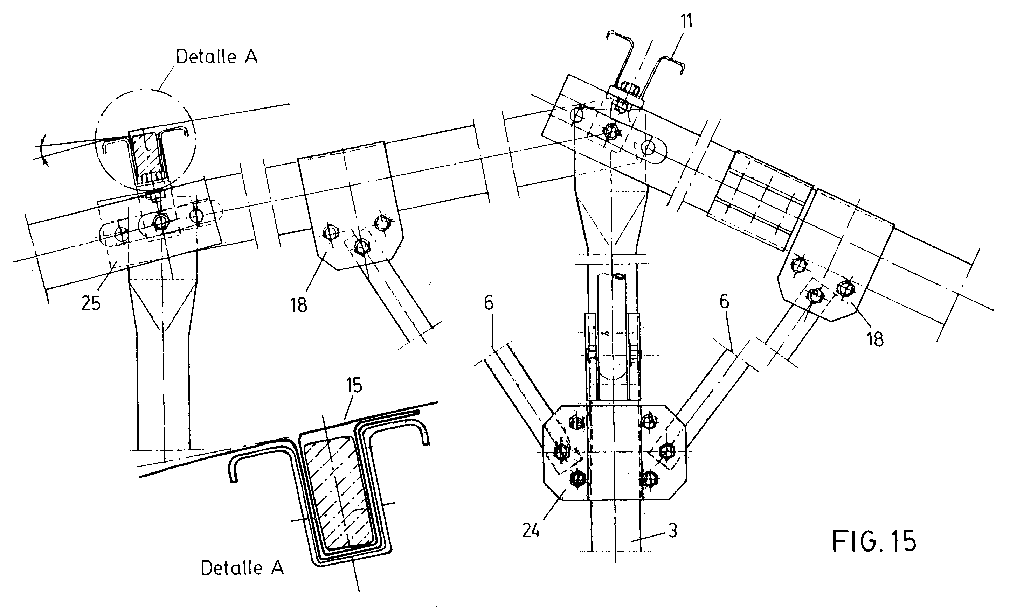

The fixing of the plastic peak (15), achieved by means of a double wedge is represented on the belts (11) which are of the omegoid type, as it can bee seen in detail A of figure 15. This fixing refers to the intermediate joint corresponding to the change of the slope. This change in the slope at the fixing area prevents the formation of roof leaks.

A pipe (13) fixed to the pillars by means of clamps (23) is laid at the joint between two modules of the glass house. Such clamps are reinforced at their supporting point (19), complemented by means of an upper reinforcement (21) on such supporting areas, to avoid the opening of the pipe and to achieve a perfect drainage apart from its role as a resistant element enabling the circulation over the peak and the fixing of the flexible plastic film of the closure by means of belts (11).

The belts (11) are fixed at the right side joint where the pillar (9) and the lintel (5) meet. The belts (2) of the lateral closure are used when such closure is made of flexible plastic film.

The pipe (13) is located at the joint between to modules of the glasshouse in the case of peaks formed by a net supporting the closure material made of flexible plastic. Such pipe will support the tubular belts (11') with the help of side flanges with a slot to enable the fixing of such belts (11').

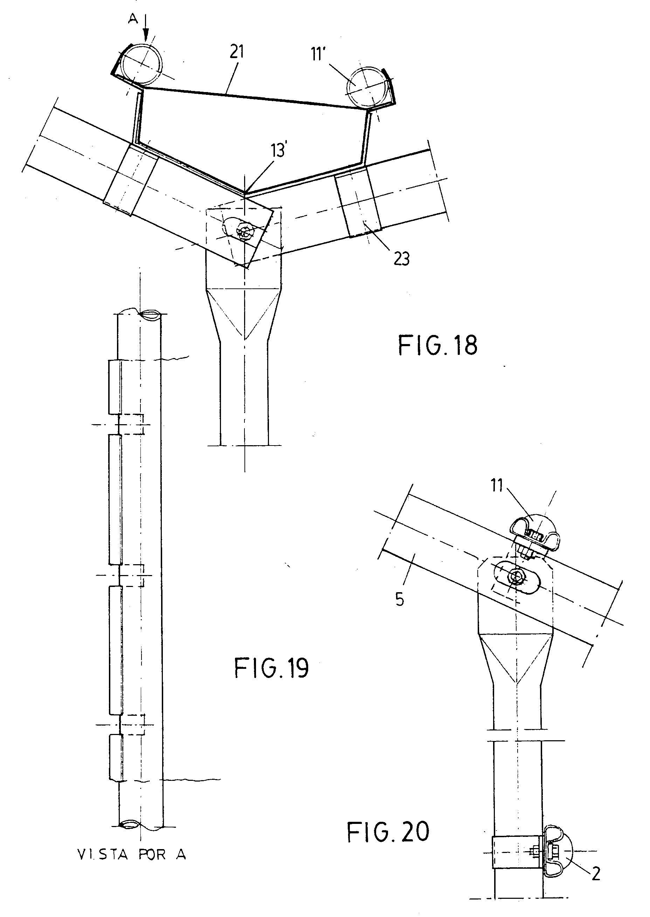

In the A section of figure 19 it can be seen that some slots enable the steel nets to pass through the side flanges and the end wings of the pipe.

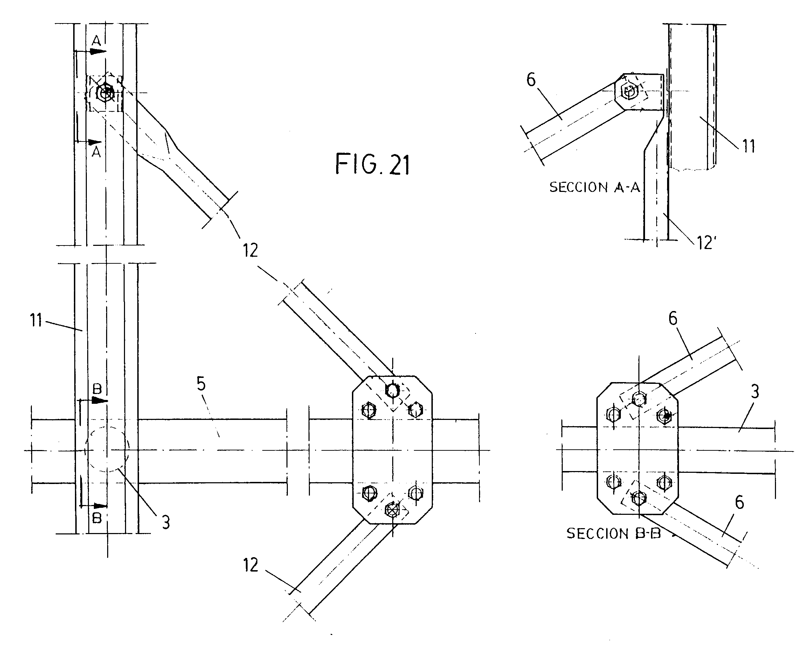

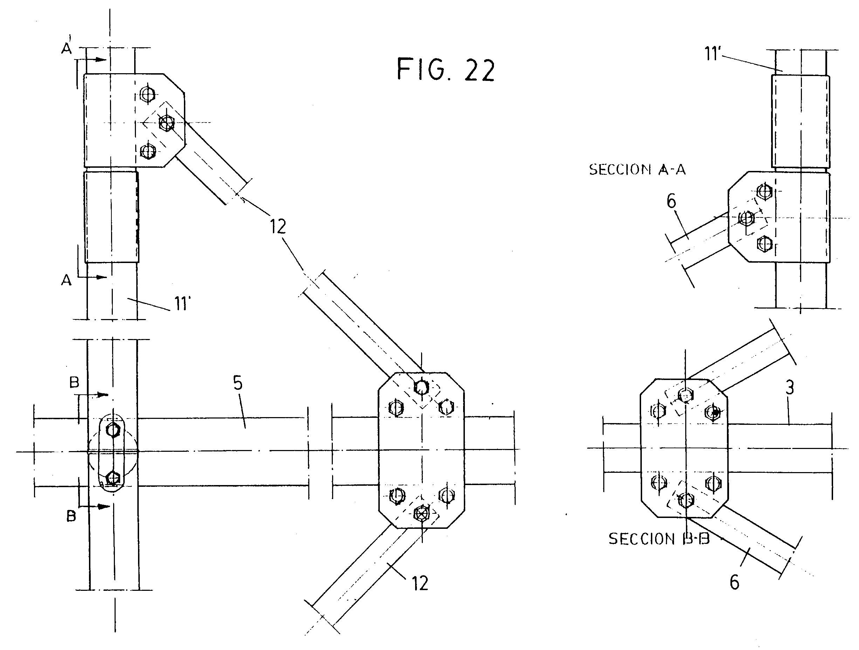

The belts (11') are located at the right side joint where the pillar and the lintel meet. The belts (2) are located at the bottom of the windows to fix the double net from the closure. Iron mountings similar to those used for the rest of the structure, shown in figures 21 and 22 are used in the case of steel spurs (6) joined from the pillars (12) and in peaks.

The window mechanism selected is a flexible plastic film roller (15) on driving axes (24) that unroll the cables (25) when they roll the windows and vice versa, by means of a pulley mechanism. A counterweight (27) is attached to each support which serves to keep the flexible plastic film (15) tight at all times, and to avoid its uprising by the wind.

In the case of ply windows mechanisms, the counterweight pulley has been located over the steel spur (6). The counterweight travels twice due to the incorporation of another pulley to avoid that the counterweight reaches the detachable ply or thermal screen area.

In the case of side window mechanisms the cable (25), and not the counterweight, is the element that interferes with the eventual thermal screen since the window is located within the screen area. The operating mechanism is the same as that described for the ply window but, in this case, it incorporates only one pulley since the double path is no longer required.

The thermal screen (29) or second detachable ply located between the supports of the stakes (28) and the lower support of the steel spurs (6) will be folded over the planes of the frames to minimize any eventual shades.

The flexible plastic film which is the material of the detachable inner ply or thermal scree (29) will be guided by two nets (30 and 31) and the lower net (31) will support it.

It is not the intention to describe further this invention since any expert on the subject will be able to understand it easily on the basis of the information provided to appreciate the scope of this invention and its advantages and to reproduce it.

The materials, shape, size and layout of the elements can be varied provided they do not alter the essentials of this invention.

The terms used in this description as well as their meaning should always be considered as non-limitative.

## Claims

1. Asymmetrical glasshouse characterized because it consists of two slopes in the longer peak supporting (14) - (17) the closure material at the point where both slopes meet.

2. Asymmetrical glasshouse characterized because there is a side bracing of all the perimetric pillars (9) by means of ties (8) anchored between the pillars (9) and the foundations (10) conferring horizontal stability to the structure and minimizing the eventual deformations on such horizontal plane.

3. Asymmetrical glasshouse characterized because there is a side bracing of all the perimetric pillars (9) by means of ties (8) anchored between the pillars (9) and the foundations (10) to pre-stress its structure to obtain the minimum requirements for the most significant components.

4. Asymmetrical glasshouse characterized because there is a side bracing between the support or stake of the culture products (28) and the foundations (10) by means of ties (8').

5. Asymmetrical glasshouse characterized because it enables to define rigid joints where the lintels (5) meet close to the pillars (3 and 4) and the belts (11 - 11') where by means of multiple holes the eventual laying errors can be amended.

6. Asymmetrical glasshouse characterized because it incorporates belts (11') and lintels (5) formed by rounded tubes with one or both ends flat forming side flanges which can be bolted thus conferring to the joint a cross-sectional rigidity by means of such flanges (32).

7. Asymmetrical glasshouse characterized because it incorporates roller blind windows with counterweights enabling to keep the tension of the closure material of the windows across all its surface.

8. Asymmetrical glasshouse characterized because it enables the installation of a flexible detachable inner ply or screen between two nets serving as guide and support (30,31) and located between the product support (28) and the lower part of the steel spurs (6).
